# FASCICULE DE BREVET EUROPEEN

(11) **EP 0 866 229 B1**
(45) Date de publication et mention de la délivrance du brevet: **28.05.2003**
(21) Numéro de dépôt: 98400448.1
(22) Date de dépôt: 25.02.1998
(51) Int. Cl.: F16B 13/06, F16B 13/12

(54) **Cheville d'ancrage, flan prédécoupé et procédé pour la réalisation de la cheville d'ancrage**
Verankerungsdübel, vorgeschnittener Zuschnitt und Verfahren zur Herstellung dieses Verankerungsdübels
Anchoring dowel, pre-cut blank and method for the manufacturing of the anchoring dowel

(30) Priorité: 21.03.1997 FR 9703480
(43) Date de publication de la demande: 23.09.1998
(73) Titulaire: SOCIETE DE PROSPECTION ET D'INVENTIONS TECHNIQUES SPIT, 26501 Bourg-Les-Valence Cédex (FR)
(72) Inventeur: Pourtier, Fabrice, 26800 Portes-Les-Valence (FR)
(74) Mandataire: Bloch, Gérard

(56) Documents cités:
- EP-A- 0 757 185
- FR-A- 2 704 608
- GB-A- 2 140 889

## Description

L'invention concerne une cheville pour fixation d'une pièce à un matériau creux, la cheville étant destinée à être introduite dans le matériau creux et à y être ancrée par introduction d'un élément d'ancrage, par exemple une vis assurant la fixation de la pièce au matériau creux.

Plus particulièrement, l'invention concerne une cheville d'ancrage comprenant une douille cylindrique comportant une partie centrale, ménageant au moins une fente d'ancrage longitudinale, et deux parties de tête et de pied adjacentes.

La partie de tête est agencée pour prendre appui sur le matériau et empêcher la rotation de la cheville. La partie du pied est taraudée intérieurement pour être tirée vers la partie de tête, par vissage de l'élément d'ancrage, afin d'expanser la partie centrale de la cheville par ouverture de la fente d'ancrage.

Pour sa fabrication, la cheville d'ancrage peut être formée à partir d'un flan de tôle prédécoupé.

Dans ce cas, le flan est roulé sur lui-même en une douille, la tête d'arrêt est rabattue sur la douille ainsi formée. Généralement, le taraudage intérieur du pied d'expansion est réalisé après conformation de la douille à l'aide d'un outil de taraudage.

Les chevilles obtenues par un tel procédé de fabrication ne sont toutefois pas d'une grande fiabilité. En effet, l'enroulement du flan forme une ligne de faiblesse au niveau de la jointure des bords du flan. Lors de l'ancrage, la fente d'ancrage s'ouvre en soumettant le pied d'expansion à un effort tel qu'il peut aussi s'ouvrir par la ligne de faiblesse, et rendre donc le vissage inefficace.

L'invention vise à résoudre ce problème.

A cet effet, l'invention concerne une cheville d'ancrage à douille expansible cylindrique comprenant une tête d'appui, un pied taraudé et, entre la tête et le pied, un corps fendu destiné à être expansé par rapprochement de la tête et du pied, la douille comprenant un flan de tôle enroulé sur lui-même, le pied de la douille comportant une paroi externe et une paroi interne prolongeant la paroi externe et rabattue contre elle, caractérisée par le fait que les deux parois de pied présentent respectivement deux plans de joint radiaux angulairement décalés.

L'invention est donc remarquable par l'existence d'une ligne de faiblesse supplémentaire dans le pied d'expansion, ce qui paradoxalement a pour effet de consolider ce pied d'expansion, cet effet étant obtenu grâce au décalage angulaire des deux lignes de faiblesse.

On remarquera que FR-A-2 704 608 enseigne une cheville d'un type similaire, mais dont les deux joints s'étendent dans un même plan.

Le pied d'expansion comprend avantageusement des moyens de verrouillage en position enroulée.

Dans une forme de réalisation préférée de l'invention, les moyens de verrouillage du pied d'expansion comprennent une languette et une encoche latérales de verrouillage de la paroi externe et un évidement dans la paroi interne.

Grâce à cela, le pied d'expansion est davantage consolidé le long de la ligne de faiblesse de sa paroi externe.

L'invention concerne aussi un flan de tôle prédécoupé pour la réalisation de la cheville d'ancrage de l'invention, comprenant :
- une partie centrale ménageant au moins une fente;
- une partie de tête annulaire ;
- une partie de pied divisée longitudinalement en deux bandes adjacentes de largeurs respectives différentes depuis un bord longitudinal commun.

On remarquera encore que FR-A-2 704 608 n'enseigne pas non plus un tel flan de tôle.

Le décalage latéral des deux bandes destinées à être rabattues l'une sur l'autre puis enroulées pour former le pied d'expansion de la cheville, permet de séparer les lignes de faiblesse du pied de cheville dans deux plans radiaux distincts.

L'invention concerne enfin un procédé de réalisation de la cheville d'ancrage à partir du flan de tôle prédécoupé de l'invention selon lequel on découpe, dans un flan de tôle, une partie sensiblement rectangulaire prolongée, d'un côté, par une partie annulaire, on découpe au moins une fente dans cette partie rectangulaire, on réalise à un coin de la partie rectangulaire opposée à la partie annulaire, une échancrure pour former une bande de pied de plus petite largeur, on rabat cette bande sur la partie rectangulaire et on enroule cette partie rectangulaire sur elle-même pour former une douille cylindrique sur laquelle on rabat la partie circulaire.

L'invention sera mieux comprise à l'aide de la description suivante d'une forme de réalisation préférée de la cheville d'ancrage de l'invention, d'un flan de tôle prédécoupé pour la réalisation de la cheville d'ancrage, et du mode préféré de réalisation du procédé de réalisation de la cheville d'ancrage, en référence au dessin annexé sur lequel :
- la figure 1 représente une vue en perspective de la forme de réalisation préférée de la cheville d'ancrage ;
- la figure 2 représente une vue en coupe axiale de la cheville d'ancrage de la figure 1 ;

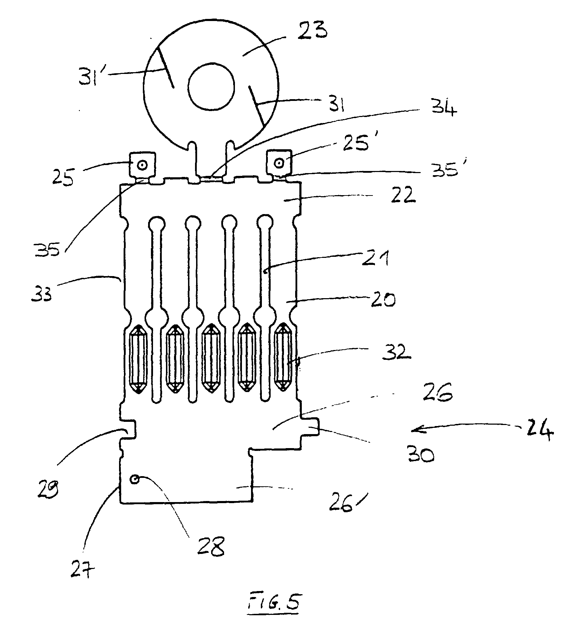

- la figure 3 représente une vue en coupe le long de la ligne III-III de la figure 2 ;
- la figure 4 représente un agrandissement de la zone IV de la figure 2; et
- la figure 5 représente une vue du flan de tôle prédécoupé pour la réalisation de la cheville d'ancrage de la figure 1.

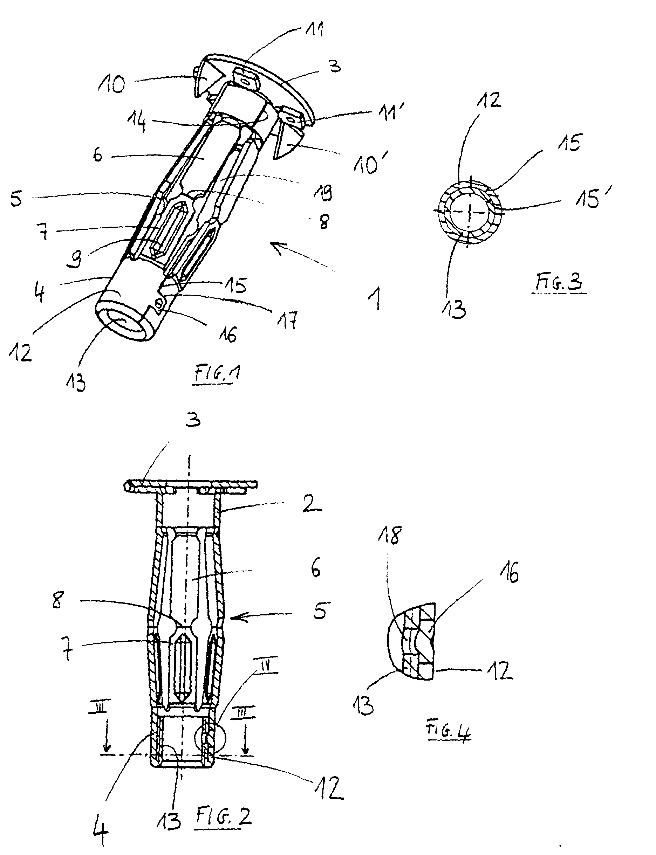

La cheville d'ancrage, représentée sur la figure 1, est destinée à être introduite dans un trou ménagé dans un matériau creux, une paroi en briques creuses par exemple, et à y être ancrée par vissage d'un élément d'ancrage dans la cheville, afin d'assurer le maintien, dans le matériau creux de l'élément d'ancrage.

La cheville d'ancrage de la figure 1, constituée en un seul tenant à partir d'un flan de tôle prédécoupé qui sera décrit par la suite, comprend une douille expansible cylindrique 1.

La douille comporte une partie de tête 2, un pied 4 taraudé intérieurement, et entre la partie de tête 2 et le pied 4, un corps fendu 5 destiné à être expansé par rapprochement de la partie de tête 2 et du pied 4 pour ancrage de la cheville, dans le matériau creux, comme cela sera explicité dans la description de l'utilisation de la cheville.

Le corps fendu 5 ménage ici cinq fentes longitudinales d'ancrage 19 formant cinq bras d'ancrage et cinq avant-bras d'expansion, chaque bras 6 et chaque avant-bras correspondant 7, de longueurs respectives sensiblement identiques, étant joints l'un à l'autre, à l'une de leurs extrémités par une zone de pliure 8 de plus faible largeur, et respectivement solidaires de la partie de tête 2 et du pied 4 à leur autre extrémité. Les avant-bras 7 ménagent chacun des nervures longitudinales 9 en creux de consolidation.

La partie de tête 2, non fendue, adjacente au corps fendu 5, supporte à son extrémité libre une tête d'appui 3, ici en forme de collerette, s'étendant dans un plan perpendiculaire à l'axe de la douille 1. La tête 3 présente ici deux dents pointues 10, 10' de blocage en rotation de la cheville, repliées et orientées parallèlement à l'axe de la douille 1 vers le pied 4.

Ici deux pattes de consolidation 11, 11', chacune solidaire de la partie de tête 2, sont plaquées et soudées contre la collerette 3, afin de raidir la tête 3 avec la douille 1. En outre, la paroi de la partie de tête 2 présente un plan de joint radial 14 dans lequel se joignent deux bords latéraux parallèles à l'axe de la cheville, l'existence de ce plan de joint résultant de la constitution en un seul tenant de la cheville et de sa réalisation par enroulement comme cela sera explicité plus loin.

Le pied 4 de la douille 1, non fendu et adjacent au corps fendu 5, comprend une paroi externe 12 et une paroi interne 13 prolongeant la paroi externe 12 et rabattue contre elle, à l'intérieur de la douille 1. Les deux parois de pied 12, 13, externe et interne, présentent respectivement deux plans de joint radiaux 15, 15', tels que celui de la partie de tête 2, décalés angulairement, afin de consolider le pied 4 en l'empêchant de s'ouvrir lors de l'expansion de la cheville comme cela sera décrit plus loin.

La paroi externe 12 présente une languette de verrouillage 16 prolongeant latéralement l'un des bords de jointure, introduite dans une encoche 17 de forme complémentaire ménagée dans l'autre bord de jointure. La paroi interne 13 ménage au droit de l'encoche 17 un évidement 18, la zone de la languette 16 recouvrant l'évidement 18 étant légèrement emboutie dans l'évidement 18 afin de verrouiller le pied d'expansion 4 en position enroulée.

L'utilisation de la cheville d'ancrage va maintenant être décrite.

La cheville est introduite dans un trou ménagé dans un matériau creux jusqu'à ce que les dents 10,10' de blocage en rotation s'enfoncent dans la paroi du matériau creux et que la tête d'appui 3 vienne buter, en appui, contre le bord extérieur du trou.

On introduit alors dans la douille 1 et au travers de la collerette 3 un élément d'ancrage, en l'espèce une vis de fixation, que l'on visse dans le pied d'expansion 4.

La douille 1 étant bloquée en rotation par les dents 10, 10', le vissage de la vis dans le pied d'expansion 4 provoque le déplacement axial du pied 4 vers la tête 3, et de ce fait, l'expansion du corps 5. Les bras d'ancrage 6 et les avant-bras d'expansion 7 s'écartent obliquement de l'axe de la cheville à partir respectivement de la partie de tête 2 et du pied 4, en ouvrant les fentes d'ancrage 19, et en pliant les zones de pliure 8, sous l'effort d'expansion.

On visse l'élément d'ancrage jusqu'à ce que les bras d'ancrage 6 viennent en appui contre la paroi du matériau creux, côté intérieur. La cheville est ainsi ancrée, dans le matériau creux, par appui de sa collerette 3 et de ses bras 6 contre la paroi du matériau creux, respectivement du côté extérieur et du côté intérieur de la paroi.

On soulignera que lors de l'expansion de la douille 1, les avant-bras 7 en s'écartant de l'axe de la cheville soumettent le pied 4 à un effort d'expansion. Cependant, le pied 4, consolidé par ses deux plans de joint radiaux décalés angulairement, résiste à l'effort d'expansion et ne s'ouvre pas.

Le flan de tôle prédécoupé pour la réalisation de la cheville, représenté sur la figure 5, va maintenant être décrit.

Le flan comprend une partie centrale 20 de forme générale rectangulaire ménageant ici quatre fentes longitudinales 21, et présentant deux découpures longitudinales 33 ménagées respectivement dans les deux bords longitudinaux opposés et dont la largeur est égale à la mi-largeur des fentes 21. Les fentes 21 sont adjacentes, à l'une de leurs extrémités, à une partie 22 non fendue formant une bande de tête, prolongée longitudinalement par une partie de tête annulaire 23, et à l'autre de leurs extrémités à une partie de pied 4 non fendue.

Le bord libre d'extrémité de la bande de tête 22 se prolonge longitudinalement par deux languettes 25, 25' disposées ici de part et d'autre de la partie annulaire de tête 23.

La partie de tête annulaire ménage deux fentes 31, 31' partant du bord extérieur de l'anneau 23, ici parallèle entre elles et sensiblement diamétralement opposées.

Les fentes 21 et les découpures 33 de la partie centrale 20 sont légèrement élargies dans leur partie médiane et à leur extrémité adjacente à la partie de tête non fendue 22. Des nervures longitudinales en creux 32 sont ménagées dans la partie 20 et s'étendent sensiblement le long de la moitié des fentes 21 au voisinage de la partie de pied 4.

La partie de pied 4 est divisée longitudinalement en deux bandes 26, 26' adjacentes de largeurs respectives différentes depuis un bord longitudinal commun 27.

La bande d'extrémité 26', qui est la bande de plus petite largeur, ménage un évidement 28, ici près du bord longitudinal commun 27.

La bande intermédiaire 26, c'est-à-dire l'autre bande de la partie de pied 4, ménage une encoche 29 dans le bord commun 27, l'évidement 28 étant situé dans le prolongement longitudinal de l'encoche 29.

L'autre bord longitudinal de la bande intermédiaire 26, opposé au bord commun 27, se prolonge latéralement par une languette 30, de forme complémentaire à la forme de l'encoche 29, et située dans le prolongement latéral de celle-ci.

Après la description structurelle du flan prédécoupé, le procédé de réalisation de la cheville d'ancrage va maintenant être décrit.

Afin de réaliser le flan prédécoupé précédemment décrit, on découpe, dans un flan de tôle, une partie sensiblement rectangulaire 20, 22, 24 et une partie annulaire 23 prolongeant longitudinalement la partie rectangulaire 20, 22, 24.

La partie rectangulaire 20, 22, 24 est prolongée longitudinalement, du côté de la partie annulaire 23, par deux languettes 25, 25', ici disposées de part et d'autre de la partie annulaire, et latéralement par une autre languette 30 située dans la zone d'extrémité de la partie rectangulaire, opposée à la partie annulaire 23.

Dans la partie rectangulaire, on découpe ici quatre fentes longitudinales 21, et dans les deux bords longitudinaux opposés deux découpures 33 de mi-largeur de fente en formant ainsi une partie centrale fendue 20 adjacente à deux parties d'extrémité non fendues 22, 24. On réalise ensuite une encoche 29 dans le bord longitudinal opposé à celui portant la languette 30, l'encoche étant de forme complémentaire à celle de la languette et latéralement opposée à celle-ci.

Entre l'encoche 29 et le bord d'extrémité voisin, on réalise un évidement 28.

Dans la partie centrale fendue 20, on embosse ici cinq nervures longitudinales en creux 32, s'étendant sensiblement le long de la moitié des fentes 21 au voisinage de la partie non fendue 24 opposée à la partie annulaire 23.

Dans la partie annulaire 23, on découpe, à partir du bord extérieur de l'anneau, deux fentes 31, 31' ici parallèles en elles et diamétralement opposées.

Enfin, à un coin de la partie rectangulaire opposé à la partie circulaire et voisin de la languette 30, on découpe une échancrure pour former une bande de pied 26' comprenant l'évidement 28, de plus petite largeur que la partie rectangulaire, et adjacente longitudinalement à une autre bande de pied 26 comprenant l'encoche 29 et la languette 30.

On rabat la bande de pied d'extrémité 26' sur l'autre bande du pied 26, on enroule la partie rectangulaire 20, 22, 24 sur elle-même, la bande 26' devenant la bande interne, et on joint bord à bord les bords latéraux des bandes de pied 26, 26'. En fin d'enroulement, on introduit la languette 30 dans l'encoche 29. On forme ainsi la douille cylindrique 1 avec son pied 4 comprenant une paroi externe et une paroi interne prolongeant la paroi externe et rabattue contre elle.

La bande destinée à devenir la bande interne après repliement, a une longueur et une épaisseur permettant son enroulement bord à bord et contre la bande externe. Du fait de cet enroulement bord à bord, d'une part, et que l'un de ses deux bords, avant repliement, se trouve dans le prolongement d'un des bords de la bande destinée à devenir la bande externe, d'autre part, l'enroulement des bandes sur elles-mêmes provoque un déplacement de la bande interne s'apparentant à un vrillage, une torsion et c'est ce qui décale angulairement le plan de joint des bords de cette bande interne.

On verrouille ensuite la douille 1 en position enroulée en emboutissant légèrement une zone de la languette 30 dans l'évidement 28 de la bande interne de pied 26'.

On plie les autres languettes 25, 25' vers l'extérieur de la douille 1 perpendiculairement à l'axe de celle-ci, on rabat la partie annulaire de tête 23 sur la douille 1, et on la soude aux languettes repliées 25, 25' formant ainsi les pattes de consolidation 11, 11'. On déploie alors deux dents 10,10' de blocage en rotation de la cheville, en repliant partiellement la partie de tête 23 perpendiculairement aux fentes 31, 31'. On a ainsi formé la tête d'appui 3 de la cheville.

Enfin, on taraude intérieurement la bande de pied 26' rabattue intérieurement.

La tête d'appui 3 est ici détachable de la douille 1 de la cheville, des amorces de rupture 34, 35, 35', représentées sur la figure 5, étant ménagées dans l'épaisseur de la tôle aux jonctions de la douille 1 avec la tête 3 et les languettes 11, 11'.

Après usage, la cheville peut ainsi être extraite de son trou dans le matériau d'ancrage, le détachement de la tête d'appui 3 libérant la cheville dont l'expansion n'est plus maintenue par les appuis simultanés de la tête 3 et des bras d'expansion 6 contre les côtés respectivement extérieur et intérieur de la paroi d'ancrage.

Grâce à cela, on évite une surépaisseur peu esthétique si l'on veut peindre la face extérieure de la paroi, et la formation d'une zone d'oxydation.

## Revendications

1. Cheville d'ancrage à douille expansible cylindrique (1) comprenant une tête d'appui (3) et un pied taraudé (4) et, entre la tête (3) et le pied (4), un corps fendu (5) destiné à être expansé par rapprochement de la tête (3) et du pied (4), la douille (1) comprenant un flan de tôle enroulé sur lui-même, le pied (4) de la douille (1) comportant une paroi externe (12) et une paroi interne (13) prolongeant la paroi externe (12) et rabattue contre elle, **caractérisée par le fait que** les deux parois de pied (12, 13) présentent, respectivement, deux plans de joint radiaux (15, 15') angulairement décalés.

2. Cheville d'ancrage selon la revendication 1, dans laquelle le pied d'expansion (4) comprend avantageusement des moyens de verrouillage (16,18) en position enroulée.

3. Cheville d'ancrage selon la revendication 2, dans laquelle les moyens de verrouillage du pied d'expansion (4) comprennent une languette (16) et une encoche (17) latérales de verrouillage de la paroi externe (12) et un évidement (18) dans la paroi interne (13).

4. Cheville d'ancrage selon l'une des revendications 1 à 3, dans laquelle la tête d'appui (3) est agencée pour être détachable de la douille (1).

5. Flan de tôle prédécoupé pour la réalisation de la cheville d'ancrage selon la revendication 1, comprenant:
- une partie centrale (20) ménageant au moins une fente (21);
- une partie de tête annulaire (23);
- une partie de pied (24) divisée longitudinalement en deux bandes adjacentes (26, 26') de largeurs respectives différentes depuis un bord longitudinal commun (27).

6. Flan de tôle selon la revendication 5, dans lequel l'une (26) des deux bandes (26, 26') de la partie de pied (24) présente une encoche (29) ménagée dans l'un de ses bords longitudinaux (27) et une languette (30) portée par l'autre bord longitudinal, et l'autre bande (26') de la partie de pied (24) ménage un évidement (28).

7. Procédé de réalisation de la cheville d'ancrage de la revendication 1 à partir du flan de tôle prédécoupé selon la revendication 5, selon lequel, on découpe dans un flan de tôle une partie sensiblement rectangulaire prolongée (20, 22, 24) d'un côté, par une partie annulaire (23), on découpe au moins une fente (21) dans cette partie rectangulaire, on réalise à un coin de la partie rectangulaire (20, 22,24) opposé à la partie annulaire (23), une échancrure pour former une bande de pied (26') de plus petite largeur, on rabat cette bande (26') sur la partie rectangulaire et on enroule cette partie rectangulaire sur elle-même pour former une douille cylindrique (1) sur laquelle on rabat la partie annulaire (23).

8. Procédé de réalisation de la cheville d'ancrage selon la revendication 7, dans lequel :
- lors de la découpe du flan de tôle, on réalise, le long d'un bord longitudinal de la partie rectangulaire, une languette (30) et, dans le bord longitudinal opposé, une encoche (29) de forme complémentaire, ainsi qu'un évidement (28) dans la bande de pied (26') de plus petite largeur, et
- en formant la douille cylindrique (1), on introduit la languette (30) dans l'encoche (29) et on la déforme au droit de l'évidement (28) de la bande de pied (26') de plus petite largeur.

## Patentansprüche

1. Verankerungsdübel mit expandierbarer zylindrischer Hülse (1), umfassend einen Stützkopf (3) und einen Gewindefuß (4) und zwischen dem Kopf (3) und dem Fuß (4) einen geschlitzten Körper (5), der dazu bestimmt ist, durch Annäherung des Kopfes (3) und des Fußes (4) expandiert zu werden, wobei die Hülse (1) einen eingerollten Blechzuschnitt umfasst, wobei der Fuß (4) der Hülse (1) eine Außenwand (12) und eine Innenwand (13), die die Außenwand (12) verlängert und gegen sie umgelegt ist, umfasst, **dadurch gekennzeichnet, dass** die beiden Fußwände (12, 13) jeweils zwei radiale Verbindungsflächen (15, 15') aufweisen, die winkelig versetzt sind.

2. Verankerungsdübel nach Anspruch 1, bei dem der Dehnungsfuß (4) vorzugsweise Mittel (16, 18) zur Verriegelung in der eingerollten Position umfasst.

3. Verankerungsdübel nach Anspruch 2, bei dem die Verriegelungsmittel des Dehnungsfußes (4) eine seitliche Zunge (16) und eine seitliche Kerbe (17) zur Verriegelung der Außenwand (12) und eine Aussparung (18) in der Innenwand (13) umfassen.

4. Verankerungsdübel nach einem der Ansprüche 1 bis 3, bei dem der Stützkopf (3) derart angeordnet ist, dass er von der Hülse (1) gelöst werden kann.

5. Vorgeschnittener Blechzuschnitt zur Herstellung des Verankerungsdübels nach Anspruch 1, umfassend:
- einen mittleren Teil (20), der mindestens einen Schlitz (21) ausspart;
- einen ringförmigen Kopfteil (23) ;
- einen Fußteil (24), der in Längsrichtung in zwei aneinander grenzende Bänder (26, 26') aufgeteilt ist, die je von einem gemeinsamen Längsrand (27) aus unterschiedliche Breiten aufweisen.

6. Blechzuschnitt nach Anspruch 5, bei dem eines (26) der beiden Bänder (26, 26') des Fußteils (24) eine Kerbe (29), die in einem seiner Längsränder (27) ausgespart ist, und eine Zunge (30) aufweist, die von dem anderen Längsrand getragen wird, und das andere Band (26') des Fußteils (24) eine Aussparung (28) aufweist.

7. Verfahren zur Herstellung des Verankerungsdübels nach Anspruch 1 aus einem vorgeschnittenen Blechzuschnitt nach Anspruch 5, bei dem aus einem Blechzuschnitt ein im Wesentlichen rechteckiger Teil (20, 22, 24) ausgeschnitten wird, der auf einer Seite durch einen ringförmigen Teil (23) verlängert ist, mindestens ein Schlitz (21) in diesen rechteckigen Teil geschnitten wird, in einer Ecke des rechteckigen Teils (20, 22, 24), die dem ringförmigen Teil (23) gegenüberliegt, ein Ausschnitt hergestellt wird, um ein Fußband (26') von kleinerer Breite zu bilden, dieses Band (26') auf den rechteckigen Teil umgelegt und dieser rechteckige Teil eingerollt wird, um eine zylindrische Hülse (1) zu bilden, auf die der ringförmige Teil (23) umgelegt wird.

8. Verfahren zur Herstellung des Verankerungsdübels nach Anspruch 7, bei dem:
- beim Ausschneiden des Blechzuschnitts entlang eines Längsrandes des rechteckigen Teils eine Zunge (30) und in dem gegenüberliegenden Längsrand eine Kerbe (29) komplementärer Form sowie eine Aussparung (28) in dem Fußband (26') kleinerer Breite hergestellt werden, und
- bei Bildung der zylindrischen Hülse (1) die Zunge (30) in die Kerbe (29) eingeführt und im rechten Winkel zur Aussparung (28) des Fußbandes (26') kleinerer Breite verformt wird.

## Claims

1. Anchoring plug with cylindrical expansible sleeve (1) comprising a abutment head (3) and a threaded foot (4) and, between the head (3) and the foot (4), a split body (5) intended to be expanded by bringing the head (3) and the foot (4) closer together, the sleeve (1) comprising a sheet metal blank wound on itself, the foot (4) of the sleeve (1) including an external wall (12) and an internal wall (13) extending the external wall (12) and folded over onto it, **characterised by** the fact that the two foot walls (12, 13) have, respectively, two angularly offset radial joining planes (15, 15').

2. Anchoring plug as described in claim 1, in which the expansion foot (4) advantageously includes means for locking (16, 18) in the wound position.

3. Anchoring plug as described in claim 2, in which the locking means of the expansion foot (4) comprise a lateral tongue (16) and notch (17) for locking the external wall (12) and a cavity (18) in the internal wall (13).

4. Anchoring plug as described in one of claims 1 to 3, in which the abutment head (3) is arranged to be detachable from the sleeve (1).

5. Pre-cut sheet metal blank for forming the anchoring plug as described in claim 1, comprising:
- a central part (20) providing at least one slot (21);
- an annular head part (23);
- a foot part (24) divided longitudinally into two adjacent strips (26, 26') of different respective widths from a common longitudinal edge (27).

6. Sheet metal blank as described in claim 5, in which one (26) of the two strips (26, 26') of the foot part (24) has a notch (29) formed in one of its longitudinal edges (27) and a tongue (30) carried by the other longitudinal edge, and the other strip (26') of the foot part (24) provides a cavity (28).

7. Process for producing the anchoring plug of claim 1 from the pre-cut sheet metal blank as described in claim 5, in accordance with which, from a sheet metal blank a substantially rectangular part is cut out, extended (20, 22, 24) on one side by an annular part (23), at least one slot (21) is cut out of this rectangular part, an indentation is created at a corner of the rectangular part (20, 22, 24) opposite to the annular part (23), to form a foot strip (26') of lesser width, this strip (26') is folded over onto the rectangular part and this rectangular part is wound on itself to form a cylindrical sleeve (1) onto which the annular part (23) is folded down.

8. Process for producing the anchoring plug as described in claim 7, in which:
- when the sheet metal blank is cut out, there is created, along a longitudinal edge of the rectangular part, a tongue (30) and, in the opposite longitudinal edge, a notch (29) of complementary form, and a cavity (28) in the foot strip (26') of lesser width, and
- in forming the cylindrical sleeve (1), the tongue (30) is introduced into the notch (29) and it is deformed opposite the cavity (28) in the foot strip (26') of smaller width.
